# EUROPEAN PATENT APPLICATION

(11) **EP 4 773 381 A1**
(43) Date of publication of application: **08.07.2026**
(21) Application number: 24878461.3
(22) Date of filing: 17.05.2024
(51) Int. Cl.: H01M 50/30

(54) **BATTERY CELL, BATTERY COMPRISING SAME, AND ELECTRIC DEVICE**

(30) Priority: 20.10.2023 CN 202311369128
(71) Applicant: Contemporary Amperex Technology Co., Limited, Ningde, Fujian 352100 (CN)
(72) Inventor: WU, Kai, Ningde, Fujian 352100 (CN); HAN, Fengsheng, Ningde, Fujian 352100 (CN)
(74) Representative: Kraus & Lederer PartGmbB
(86) International application number: PCT/CN2024/093859
(87) International publication number: WO 2025/081808

(57) **Abstract**

A battery cell (100), a battery (1000) comprising same, and an electric device. The battery cell (100) comprises: a casing (10), the casing having an accommodating cavity (11), the accommodating cavity (11) having a first wall and a second wall which are oppositely arranged in a first direction, and an explosion-proof valve being provided on the first wall; and air guide plates (20), the air guide plates (20) being arranged in the accommodating cavity (11) and located between the first wall and the second wall, an air guide channel and vent holes (23) being formed in each air guide plate (20), the air guide channel extending in the first direction, and the air guide channel being communicated with the accommodating cavity (11) outside the air guide channel by means of the vent holes (23). According to the battery cell, a large discharge space is formed for gas generated in a cycle process of the battery cell, thereby reducing the probability of thermal runaway of the battery cell and reducing the risk of weld cracking of the casing caused by excessive pressure. In addition, a moving direction of the gas can be defined, and the gas generated in the cycle process of the battery cell is guided, so that the gas can be smoothly discharged, thereby improving the gas discharge effect.

## Description

### CROSS-REFERENCE TO RELATED APPLICATIONS

The present application claims priority to Chinese Patent Application No. 202311369128.0 filed on October 20, 2023, which is incorporated herein by reference in its entirety.

### TECHNICAL FIELD

The present application relates to the field of battery technology, and in particular, to a battery cell, a battery having the same, and an electric device.

### BACKGROUND

In the related art, it is indicated that currently, during production of battery cells, ultra-thin separators are introduced and used, and the use of the ultra-thin separators causes the volume of the electrode assembly to decrease, the assembly clearance to decrease, and the energy density to increase, thereby providing space to increase the capacity of the electrode assembly. With the increase in the capacity of the electrode assembly, the gas production amount of the battery cell also increases accordingly, and the probability of thermal runaway of the battery cell and the risk of a weld seam of the housing cracking caused by excessive pressure also increase accordingly.

### SUMMARY

The present application aims to solve at least one of the technical problems existing in the prior art. To this end, the present application provides a battery cell, where the battery cell can provide a relatively large discharge space for the gas generated during the cycling process of the battery cell, and reduce the probability of thermal runaway of the battery cell and the risk of a weld seam of the housing cracking caused by excessive pressure. Additionally, the movement direction of the gas can be limited, and the gas generated during the cycling process of the battery cell can be guided to be smoothly discharged, improving the exhaust effect.

The present application also provides a battery having the above battery cell.

The present application also provides an electric device having the above battery.

The battery cell of the first aspect of the present application includes: a housing, the housing having an accommodation cavity, the accommodation cavity having a first wall and a second wall oppositely arranged in a first direction, and the first wall being provided with an explosion-proof valve; and an air guide plate, the air guide plate being disposed in the accommodation cavity and located between the first wall and the second wall, the air guide plate having an air guide channel and a vent hole, the air guide channel extending along the first direction, and the air guide channel communicating with the accommodation cavity outside the air guide channel through the vent hole.

According to the battery cell of the present application, providing the air guide plate allows for a relatively large discharge space for the gas generated during the cycling process of the battery cell, and improves the exhaust effect, thereby reducing the internal pressure of the battery cell, so as to reduce the probability of thermal runaway of the battery cell and the risk of a weld seam of the housing cracking caused by excessive pressure. Additionally, the movement direction of the gas can be limited, and the gas generated during the cycling process of the battery cell can be guided to be smoothly discharged, improving the exhaust effect.

According to an example of the present application, the first wall is a top wall of the accommodation cavity, and the explosion-proof valve is provided on the first wall of the housing.

In this embodiment, providing the explosion-proof valve on the top wall of the accommodation cavity is conducive to ensuring the exhaust space at the position of the explosion-proof valve, so that the gas in the accommodation cavity can be smoothly discharged, thereby reducing the internal pressure of the battery cell, reducing the probability of thermal runaway of the battery cell and the risk of a weld seam of the housing cracking caused by excessive pressure.

According to an example of the present application, an electrode assembly is provided in the accommodation cavity, and the air guide plate is provided between a sidewall of the accommodation cavity and the electrode assembly.

In this embodiment, by providing the air guide plate between the sidewall of the accommodation cavity and the electrode assembly, damage to the electrode assembly or the air guide plate caused by mutual squeezing between the air guide plate and the electrode assembly can be reduced, and the probability of blockage of the air guide channel can be effectively reduced, thereby ensuring the exhaust space and improving the exhaust effect.

According to an example of the present application, the number of the air guide plates is plural, and the plural air guide plates are arranged along a circumferential direction of the accommodation cavity.

In this embodiment, by providing the plural air guide plates, the plural air guide plates being arranged along the circumferential direction of the accommodation cavity, the exhaust effect of the battery cell can be improved, the probability of thermal runaway of the battery cell can be effectively reduced, and the use reliability of the battery cell can be improved.

According to an example of the present application, the accommodation cavity has a first sidewall, a second sidewall, a third sidewall, and a fourth sidewall, the first sidewall and the second sidewall are oppositely arranged in a second direction in a horizontal plane, the third sidewall and the fourth sidewall are oppositely arranged in a third direction in the horizontal plane, and the first direction, the second direction, and the third direction are perpendicular to each other pairwise, where the air guide plate is provided between each of the first sidewall and the second sidewall and the electrode assembly, and/or the air guide plate is provided between each of the third sidewall and the fourth sidewall and the electrode assembly.

In this embodiment, by providing the air guide plate between the first sidewall and the second sidewall and the electrode assembly or providing the air guide plate between the third sidewall and the fourth sidewall and the electrode assembly, the energy density of the battery cell can be increased while achieving smooth exhaust; and by providing the air guide plate between the first sidewall, the second sidewall, the third sidewall, and the fourth sidewall and the electrode assembly, the space of the air guide channel can be increased, the exhaust space can be greatly increased, and the exhaust effect can be improved, thereby further reducing the internal pressure of the battery cell, so as to reduce the probability of thermal runaway of the battery cell and the risk of a weld seam of the housing cracking caused by excessive pressure.

According to an example of the present application, in the first direction, the air guide plate extends from the second wall of the accommodation cavity to the first wall of the accommodation cavity.

In this embodiment, by providing the air guide plate extending from the second wall of the accommodation cavity to the first wall of the accommodation cavity in the first direction, the gas generated inside the battery cell can be guided to the explosion-proof valve, and then the gas can be discharged to the outside of the battery cell, thereby effectively reducing the occurrence of thermal runaway of the battery cell.

According to an example of the present application, a spacing between the air guide plate and the second wall of the accommodation cavity is less than or equal to 10 mm; and/or a spacing between the air guide plate and the first wall of the accommodation cavity is less than or equal to 10 mm.

In this embodiment, as the spacing between the air guide plate and the second wall and the first wall of the accommodation cavity is less than or equal to 10 mm, the probability of exhaust failure of the air guide plate can be effectively reduced, and the exhaust effect can be improved, thereby reducing the probability of thermal runaway of the battery cell.

According to an example of the present application, the air guide plate has a first edge and a second edge oppositely arranged in a second direction in a horizontal plane, the second direction is perpendicular to the first direction and perpendicular to a thickness direction of the air guide plate, the accommodation cavity has a first sidewall and a second sidewall oppositely arranged in the second direction, the first edge is provided facing the first sidewall, and the second edge is provided facing the second sidewall, where a spacing between the first edge and the first sidewall in the second direction is less than or equal to 10 mm; and/or a spacing between the second edge and the second sidewall in the second direction is less than or equal to 10 mm.

In this embodiment, as the spacing between the first edge and the first sidewall in the second direction is less than or equal to 10 mm, and the spacing between the second edge and the second sidewall in the second direction is less than or equal to 10 mm, the probability of exhaust failure of the air guide plate can be effectively reduced, and the exhaust effect can be improved, thereby reducing the probability of thermal runaway of the battery cell.

According to an example of the present application, the air guide plate includes: a plate body and plural support ribs, the plate body is provided extending along the first direction, the support ribs are connected to a side of the plate body facing the sidewall of the accommodation cavity, the support ribs extend along the first direction, the plural support ribs are spaced apart in the second direction, the second direction is perpendicular to the first direction and perpendicular to the thickness direction of the air guide plate, and the air guide channel is defined by cooperation between the support ribs, the plate body, and the sidewall of the accommodation cavity.

In this embodiment, by providing the plate body and the plural support ribs, the contact area between the air guide plate and the electrode assembly can be increased, thereby effectively preventing damage to the electrode assembly or the air guide plate caused by expansion of the electrode assembly squeezing against the air guide plate, so as to improve the reliability of the battery cell; at the same time, the structural strength of the air guide plate can also be enhanced, thereby reducing the probability of deformation of the air guide plate, so as to reduce the probability of thermal runaway of the battery cell caused by unsmooth exhaust path.

According to an example of the present application, the vent hole is formed on the plate body and penetrates the plate body along a thickness direction of the plate body, and the vent hole is formed between two adjacent support ribs.

In this embodiment, by providing the vent hole, the gas generated during the cycling process of the battery cell can enter the air guide channel along the vent hole and be discharged to the outside of the battery cell through the air guide channel, thereby achieving the exhaust function of the air guide plate.

According to an example of the present application, the number of the vent holes is plural, and the plural vent holes are spaced apart along a length direction and a width direction of the plate body.

In this embodiment, by providing the plural vent holes and spacing them apart in the length direction and the width direction of the plate body, the total opening area of the vent holes can be effectively increased, so that the area of the vent holes can meet the exhaust demand, and at the same time, the gas in the accommodation cavity can enter the air guide channel through the vent holes at different positions, thereby improving the exhaust effect and improving the exhaust efficiency.

According to an example of the present application, the vent hole is a circular hole, an elliptical hole, or a polygonal hole.

In this embodiment, by providing the vent hole as a circular hole, an elliptical hole, or a polygonal hole, the manufacturing difficulty of the air guide plate can be reduced, and the manufacturing speed of the air guide plate can be increased.

According to an example of the present application, in a projection plane perpendicular to the thickness direction of the plate body, a ratio of a projection area of the plural vent holes to a projection area of the plate body is 0.3-0.7.

In this embodiment, by setting the ratio of the projection area of the plural vent holes to the projection area of the plate body to 0.3-0.7, the occupation area of the plural vent holes on the plate body is not too large, which is conducive to enhancing the structural strength and stability of the plate body, and the limiting and air guiding functions of the plate body on the gas entering the air guide channel can be improved, so that the gas can be smoothly discharged along the air guide channel. The setting can also make the occupation area of the vent holes on the plate body not too small, so that the area of the vent holes can meet the exhaust demand, thereby improving the exhaust effect, so as to further reduce the probability of thermal runaway of the battery cell.

According to an example of the present application, in the second direction, among the plural support ribs, two support ribs located on two sides of the air guide plate in the second direction are respectively flush with two side edges of the plate body in the second direction.

In this embodiment, by providing that the two support ribs located on two sides of the air guide plate in the second direction are respectively flush with two side edges of the plate body in the second direction, the exhaust space of the air guide channel can be increased, thereby effectively improving the smoothness of exhaust.

According to an example of the present application, in the thickness direction of the plate body, a thickness of the support rib is 2 mm-4 mm.

In this embodiment, by setting the thickness of the support rib to 2 mm-4 mm in the thickness direction of the plate body, without affecting the energy density of the battery cell, the discharge space of the gas can be increased, so that the gas generated during the cycling process of the battery cell can be discharged in a timely manner, and the internal pressure of the battery cell can be reduced, thereby reducing the thermal runaway probability of the battery cell, and improving the use reliability and prolonging the service life of the battery cell.

According to an example of the present application, the support rib is integrally formed with the plate body; or the support rib and the plate body are separate parts, and the support rib is thermally fused with the plate body.

In this embodiment, by providing the support rib integrally formed with the plate body, the production steps of the air guide plate can be simplified, thereby increasing the production speed of the air guide plate and reducing the production cost of the air guide plate. By providing the support rib and the plate body as separate parts, the support rib being thermally fused with the plate body, the process complexity of the air guide plate can be reduced, and the mold opening cost can be reduced, thereby reducing the production cost of the air guide plate.

According to an example of the present application, the air guide plate is a polypropylene part.

In this embodiment, by providing the air guide plate as a polypropylene part, the possibility of the air guide plate being corroded by the electrolyte or being crushed can be reduced, thereby improving the reliability and prolonging the service life of the air guide plate, and the production cost of the air guide plate can be reduced.

A second aspect of the present application provides a battery, including the battery cell according to the first aspect of the present application.

The battery of the present application is provided with the battery cell of the above first aspect, improving the overall performance of the battery.

A third aspect of the present application provides an electric device, including the battery according to the second aspect of the present application.

The electric device of the present application is provided with the battery of the above second aspect, improving the overall performance of the electric device.

Additional aspects and advantages of the present application are partially given in the following description, and partially become apparent from the following description, or be understood through the practice of the present application.

### BRIEF DESCRIPTION OF DRAWINGS

FIG. 1 is a schematic diagram of a vehicle according to embodiments of the present application;
FIG. 2 is a schematic diagram of a battery according to embodiments of the present application;
FIG. 3 is an exploded view of a battery according to embodiments of the present application;
FIG. 4 is an exploded view of a battery cell according to embodiments of the present application;
FIG. 5 is a schematic diagram of a battery cell according to embodiments of the present application;
FIG. 6 is a schematic diagram of an air guide plate shown in FIG. 4;
FIG. 7 is a schematic diagram of the air guide plate shown in FIG. 4 from another angle;
FIG. 8 is a schematic diagram of the air guide plate shown in FIG. 4 from still another angle;
FIG. 9 is a schematic diagram of a battery cell according to embodiments of the present application from another angle;
FIG. 10 is a cross-sectional view along line A-A shown in FIG. 9; and
FIG. 11 is an enlarged view of part A circled in FIG. 9.

Reference numerals in the drawings:
vehicle 1;
battery 1000;
battery cell 100;
housing 10; accommodation cavity 11;
air guide plate 20; plate body 21; support rib 22; vent hole 23;
electrode assembly 30;
end cap 40; adapter sheet 50;
box body 200; main box 201; cover plate 202;
controller 2000; and motor 3000.

### DESCRIPTION OF EMBODIMENTS

The embodiments of the technical solution of the present application are described in detail below with reference to the accompanying drawings. The following embodiments are only used to illustrate the technical solution of the present application more clearly, and thus are only exemplary, and cannot be used to limit the protection scope of the present application.

Unless otherwise defined, all technical and scientific terms used herein have the same meaning as commonly understood by one of ordinary skill in the art to which the present application belongs. The terms used herein are only for the purpose of describing specific embodiments and are not intended to limit the present application. The terms "include" and "have" and any variations thereof in the specification, claims, and description of the above drawings of the present application are intended to cover non-exclusive inclusions.

In the description of the embodiments of the present application, the technical terms "first", "second" and the like are only used to distinguish different objects, and should not be understood as indicating or implying relative importance or implicitly indicating the number, specific order, or primary-secondary relationship of the indicated technical features. In the description of the embodiments of the present application, the meaning of "plural" is two or more, unless otherwise specifically defined and limited.

As used herein, "embodiment" means that a particular feature, structure, or characteristic described in connection with the embodiment can be included in at least one embodiment of the present application. The phrase appearing in various places in the specification does not necessarily refer to the same embodiment, nor is it an independent or alternative embodiment that is mutually exclusive with other embodiments. It is explicitly and implicitly understood by those skilled in the art that the embodiments described herein can be combined with other embodiments.

In the description of the embodiments of the present application, the term "and/or" is merely an association describing associated objects, indicating that three relationships can exist. For example, A and/or B can indicate: A exists alone, A and B exist simultaneously, and B exists alone. In addition, the character "/" in this text generally indicates that the preceding and following associated objects are in an "or" relationship.

In the description of the embodiments of the present application, the term "plural" refers to two or more (including two).

In the description of the embodiments of the present application, the orientation or positional relationship indicated by the technical terms "center", "longitudinal", "transverse", "length", "width", "thickness", "upper", "lower", "front", "rear", "left", "right", "vertical", "horizontal", "top", "bottom", "inner", "outer", "axial", "radial", "circumferential" and the like is based on the orientation or positional relationship shown in the drawings, and is only for the convenience of describing the embodiments of the present application and simplifying the description, rather than indicating or implying that the referred means or element must have a specific orientation, be constructed and operated in a specific orientation, and therefore should not be understood as limiting the embodiments of the present application.

In the description of the embodiments of the present application, unless otherwise expressly specified and limited, the technical terms "mounting", "connecting", "join", "fixing", and the like should be understood in a broad sense. For example, they can be a fixed connection, a detachable connection, or an integral connection; they can also be a mechanical connection or an electrical connection; or they can be a direct connection or an indirect connection through an intermediary, or they can be the internal communication or interaction relationship of two elements. For those of ordinary skill in the art, the specific meanings of the above terms in the embodiments of the present application can be understood according to specific situations.

At present, from the development of the market situation, the application of traction batteries is becoming more and more widespread. Traction batteries are not only applied to energy storage power systems such as hydropower, thermal power, wind power, and solar power stations, but also widely applied to electric bicycles, electric motorcycles, electric vehicles, and other electric vehicles, as well as military equipment, aerospace and other fields. With the continuous expansion of the application fields of traction batteries, the market demand is also continuously increasing.

Currently, during production of battery cells, ultra-thin separators are introduced, and the use of ultra-thin separators causes the volume of the electrode assembly to decrease, the assembly clearance to decrease, and the energy density to increase, thereby providing space to increase the capacity of the electrode assembly, and with the increase in the capacity of the electrode assembly, the gas production amount of the battery cell also increases accordingly, and the probability of thermal runaway of the battery cell and the risk of a weld seam of the housing cracking caused by excessive pressure also increase accordingly.

In order to solve the problem of thermal runaway and the weld seam of the housing cracking caused by excessive internal pressure during the cycling process of the battery cell, it is found through research that an air guide channel can be added inside the housing of the battery cell to ensure the exhaust space of the gas, so that the gas can be smoothly discharged, thereby reducing the internal pressure of the battery cell and reducing the occurrence of thermal runaway.

Based on the above considerations, in order to solve the problem of thermal runaway and a weld seam of the housing cracking caused by excessive internal pressure during the cycling process of the battery cell, a battery cell is designed, where an air guide plate is provided in the accommodation cavity, and the air guide plate has an air guide channel and a vent hole. In this way, the air guide channel defined by the air guide plate itself or the air guide channel defined by the cooperation of the air guide plate and the housing of the battery cell can be utilized to increase the exhaust space of the gas, guide the direction of the gas, and ensure that the gas is quickly exhausted to the position of the explosion-proof valve of the battery cell, thereby making the gas generated by the battery cell have a relatively large discharge space. This enables the airflow during the cycling process of the battery cell to be quickly discharged, so as to quickly reduce the internal pressure of the battery cell and reduce the probability of thermal runaway.

During the cycling use of the battery, since the air guide channel and the vent hole are formed on the air guide plate, and the vent hole is used for communication between the air guide channel and the accommodation cavity, when a large amount of gas is generated inside the battery cell, the gas can enter the air guide channel through the vent hole, and then be guided to the explosion-proof valve through the air guide channel and discharged. Therefore, the air guide plate of the present application can improve the exhaust situation inside the battery cell, and reduce the internal pressure of the battery cell, thereby reducing the probability of thermal runaway of the battery cell and the risk of a weld seam of the housing cracking caused by excessive pressure.

The battery cell disclosed in the embodiments of the present application can be used for electric apparatuses that use batteries as power sources or various energy storage systems that use batteries as energy storage elements. The electric apparatus can be, but is not limited to, mobile phones, tablets, notebook computers, electric toys, electric tools, battery cars, electric vehicles, ships, and spacecraft. Electric toys can include fixed or mobile electric toys, such as game consoles, electric vehicle toys, electric ship toys, and electric aircraft toys; and spacecraft can include airplanes, rockets, space shuttles, and spaceships.

The following embodiments are described by taking an electric apparatus according to an embodiment of the present application as a vehicle 1 for convenience of description.

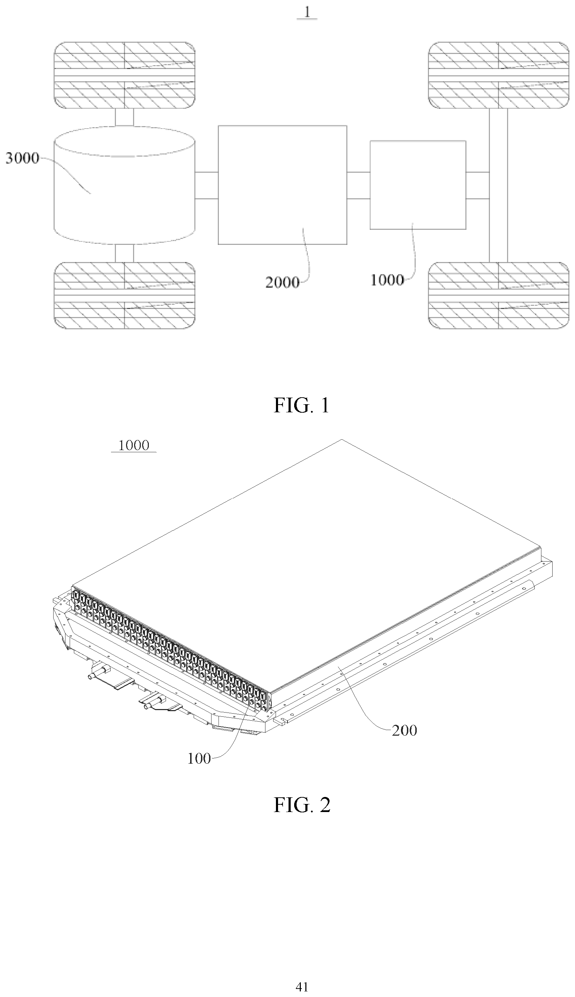

Referring to FIG. 1, FIG. 1 is a schematic diagram of the vehicle 1 provided in some embodiments of the present application. The vehicle 1 can be a fuel vehicle, a gas vehicle, or a new energy vehicle, and the new energy vehicle can be a pure electric vehicle, a hybrid vehicle, an extended-range vehicle, or the like. A battery 1000 is provided inside the vehicle 1, and the battery 1000 can be provided at the bottom, head, or tail of the vehicle 1. The battery 1000 can be used for power supply of the vehicle 1, for example, the battery 1000 can serve as an operating power source of the vehicle 1. The vehicle 1 can also include a controller 2000 and a motor 3000, where the controller 2000 is configured to control the battery 1000 to supply power to the motor 3000, for example, for the power demand of the vehicle 1 during startup, navigation, and driving.

In some embodiments of the present application, the battery 1000 can serve not only as an operating power source of the vehicle 1, but also as a driving power source of the vehicle 1, replacing or partially replacing fuel or natural gas to provide driving power for the vehicle 1.

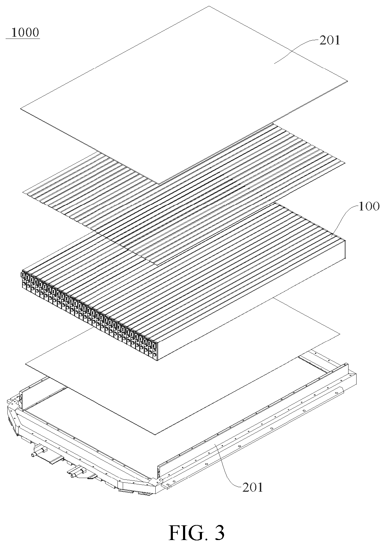

Referring to FIG. 2 and FIG. 3, FIG. 2 is a schematic diagram of the battery 1000 in some embodiments of the present application, and FIG. 3 is an exploded view of the battery 1000 in some embodiments of the present application. The battery 1000 includes a box body 200 and a battery cell 100, where the box body 200 has a cavity, and battery cell 100 is accommodated in the cavity of the box body 200. The box body 200 is used to provide an accommodation space for the battery cell 100, and the box body 200 can adopt plural structures. According to an example of the present application, the box body 200 can include a first part (for example, the main box 201 described below) and a second part (for example, the cover plate 202 described below), where the first part and the second part fit with each other, and the first part and the second part together define an accommodation space for accommodating the battery cell 100. The second part can be a hollow structure with one end open, the first part can be a plate-like structure, and the first part covers the open side of the second part, so that the first part and the second part together define the accommodation space. The first part and the second part can also both be hollow structures with one side open, and the open side of the first part engages with the open side of the second part. Certainly, the box body 200 formed by the first part and the second part can be in plural shapes, such as a cylinder or a rectangular parallelepiped.

In the battery 1000, the number of the battery cells 100 can be plural, and the plural battery cells 100 can be connected in series, in parallel, or in a hybrid manner, where the hybrid manner means that there are both series and parallel connections among the plural battery cells 100. The plural battery cells 100 can be directly connected in series, in parallel, or in a hybrid manner, and then the whole formed by the plural battery cells 100 is accommodated in the box body 200. Certainly, the battery 1000 can also be formed by first connecting the plural battery cells 100 in series, in parallel, or in a hybrid manner to form a battery module, connecting the plural battery modules in series, in parallel, or in a hybrid manner to form a whole, and accommodating the whole in box body 200. The battery 1000 can also include other structures, for example, the battery 1000 can also include a bus component for achieving electrical connection between the plural battery cells 100.

Each battery cell 100 can be a secondary battery cell or a primary battery cell; it can also be a lithium-sulfur battery cell, a sodium-ion battery cell, or a magnesium-ion battery cell, but is not limited thereto. The battery cell 100 can be in a cylindrical shape, a flat shape, a rectangular parallelepiped shape, or other shapes.

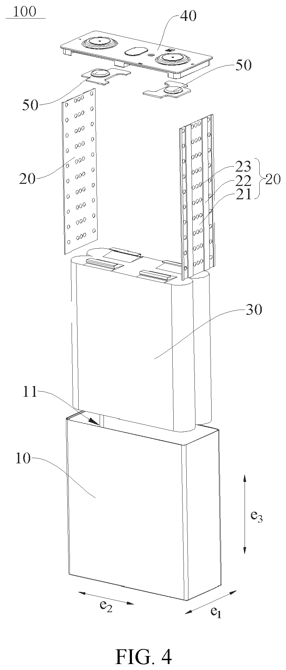

Referring to FIG. 4, FIG. 4 is a schematic diagram of the battery cell 100 provided in some embodiments of the present application, where the battery cell 100 refers to the smallest unit that constitutes the battery 1000. As shown in FIG. 4, the battery cell 100 includes an end cap 40, a housing 10, an electrode assembly 30, an adapter sheet 50, and other functional components.

The end cap 40 refers to a component that covers the opening of the housing 10 to isolate the internal environment of the battery cell 100 from the external environment. Without limitation, the shape of the end cap 40 can be adapted to the shape of the housing 10 to cooperate with the housing 10. Optionally, the end cap 40 can be made of a material with a certain hardness and strength (such as aluminum alloy), so that the end cap 40 is not easily deformed when squeezed or collided, making the battery cell 100 have higher structural strength, and the safety performance can also be improved. Functional components such as an output terminal can be provided on the end cap 40. The output terminal can be used to electrically connect with the electrode assembly 30 for outputting or inputting electrical energy of the battery cell 100. According to an example of the present application, an explosion-proof valve for releasing internal pressure when the internal pressure or temperature of the battery cell 100 reaches a threshold can also be provided on the end cap 40. The end cap 40 may be made of plural materials, including but not limited to: copper, iron, aluminum, stainless steel, aluminum alloy, and plastic. According to an example of the present application, a first insulating member and an adapter sheet 50 can also be provided on the inner side of the end cap 40, where the first insulating member can be used to isolate electrical connection components in the housing 10 from the end cap 40 to reduce the risk of short circuit; the adapter sheet 50 is connected with the tab for current transmission. Exemplarily, the first insulating member can be plastic or rubber.

The housing 10 is a component used to cooperate with the end cap 40 to form the internal environment of the battery cell 100, where the formed internal environment can be used to accommodate the electrode assembly 30 and other components. The housing 10 and the end cap 40 can be independent components, an opening can be provided on the housing 10, and the end cap 40 covers the opening to form the internal environment of the battery cell 100. Without limitation, the end cap 40 and the housing 10 can also be integrated. Specifically, the end cap 40 and the housing 10 can first form a common connection surface before other components enter the housing. When it is necessary to seal the inside of the housing 10, the end cap 40 covers the housing 10. The housing 10 can be in plural shapes and plural sizes, such as a rectangular parallelepiped shape, a cylindrical shape, and a hexagonal prism shape. Specifically, the shape of the housing 10 can be determined according to the specific shape and size of the electrode assembly 30. The housing 10 may be made of plural materials, including but not limited to: copper, iron, aluminum, stainless steel, aluminum alloy, and plastic.

The electrode assembly 30 is a component in the battery cell 100 where electrochemical reactions occur. The housing 10 can contain one or more electrode assemblies 30. The electrode assembly 30 is mainly formed by winding or stacking a positive electrode sheet and a negative electrode sheet, and a separator is usually provided between the positive electrode sheet and the negative electrode sheet. The parts of the positive electrode sheet and the negative electrode sheet having active substances constitute the main body of the electrode assembly 30, and the parts of the positive electrode sheet and the negative electrode sheet not having active substances each constitute a tab. The positive electrode tab and the negative electrode tab can be located together at one end of the main body or respectively at both ends of the main body. During the charging and discharging process of the battery 1000, the positive electrode active substance and the negative electrode active substance react with the electrolyte, and the tabs are connected to the electrode terminals to form a current loop.

The positive electrode sheet includes a positive electrode current collector and a positive electrode active substance layer, the positive electrode active substance layer is applied to the surface of the positive electrode current collector, the positive electrode current collector uncoated with the positive electrode active substance layer protrudes from the positive electrode current collector coated with the positive electrode active substance layer, and the positive electrode current collector uncoated with the positive electrode active substance layer serves as the positive electrode tab. Taking a lithium-ion battery as an example, the material of the positive electrode current collector can be aluminum, and the positive electrode active substance can be lithium cobalt oxide, lithium iron phosphate, ternary lithium, lithium manganate, or the like.

The negative electrode sheet includes a negative electrode current collector, and a negative electrode active substance layer, the negative electrode active substance layer is applied to the surface of the negative electrode current collector, the negative electrode current collector uncoated with the negative electrode active substance layer protrudes from the negative electrode current collector coated with the negative electrode active substance layer, and the negative electrode current collector uncoated with the negative electrode active substance layer serves as the negative electrode tab. The material of the negative electrode current collector can be copper, and the negative electrode active substance can be carbon or silicon, and the like. In order to ensure that no fusing occurs when a large current passes, plural positive electrode tabs are provided and stacked together, and plural negative electrode tabs are provided and stacked together.

The material of the separator can be PP (polypropylene, polypropylene), PE (polyethylene, polyethylene), or the like.

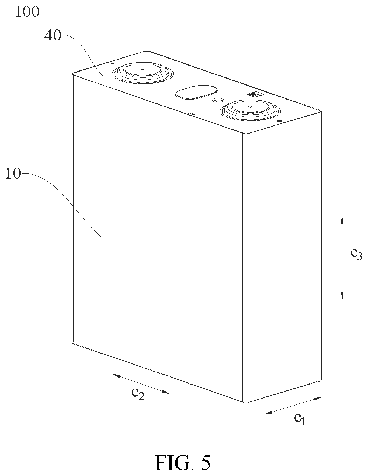

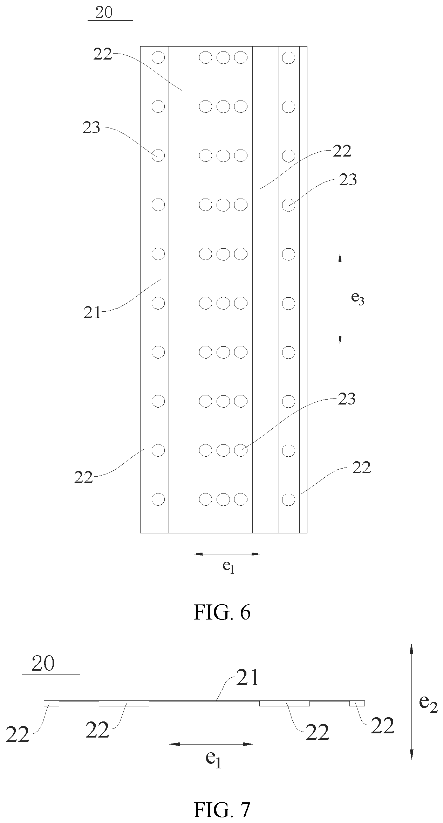

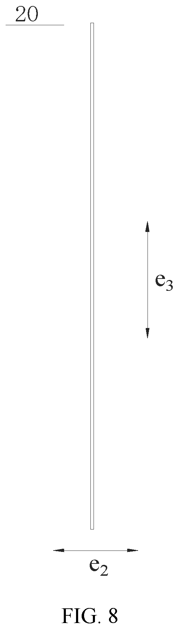

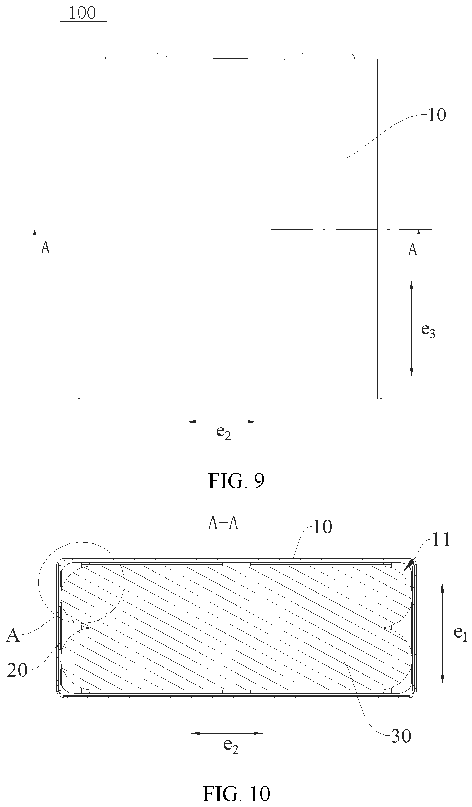

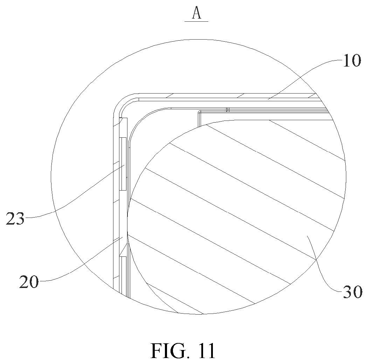

The battery cell 100 according to the embodiment of the first aspect of the present application is described below with reference to FIG. 4 to FIG. 11. FIG. 4 is an exploded view of the battery cell 100 according to some embodiments of the present application, FIG. 5 is a schematic diagram of the battery cell 100 according to some embodiments of the present application, FIG. 6 is a schematic diagram of the air guide plate 20 shown in FIG. 4, FIG. 7 is a schematic diagram of the air guide plate 20 shown in FIG. 4 from another angle, FIG. 8 is a schematic diagram of the air guide plate 20 shown in FIG. 4 from yet another angle, FIG. 9 is a schematic diagram of the battery cell 100 according to some embodiments of the present application from another angle, FIG. 10 is a cross-sectional view along line A-A shown in FIG. 9, and FIG. 11 is an enlarged view of part A circled in FIG. 9.

An embodiment of the present application provides a battery cell 100. As shown in FIG. 4, the battery cell 100 includes a housing 10 and an air guide plate 20, the housing 10 has an accommodation cavity 11, the accommodation cavity 11 has a first wall and a second wall oppositely arranged in a first direction, and the first wall is provided with an explosion-proof valve. The air guide plate 20 is disposed in accommodation cavity 11 and located between the first wall and the second wall, the air guide plate 20 has an air guide channel and a vent hole 23, the air guide channel extends along the first direction, and the air guide channel communicates with the accommodation cavity 11 outside the air guide channel through the vent hole 23.

Specifically, the housing 10 is mainly used to isolate the inside and the outside of the battery cell 100, effectively preventing the inside of the battery cell 100 from communicating with the outside, thereby improving the reliability of the battery cell 100. The air guide plate 20 can guide the gas in the accommodation cavity 11 to the explosion-proof valve through the air guide channel and discharge it through the explosion-proof valve, which can effectively reduce the pressure inside the battery cell 100, thereby reducing the probability of thermal runaway of the battery cell 100.

For example, the first direction can refer to the e3 direction in the drawings, where the e3 direction is also the height direction of the battery cell 100, and the first wall and the second wall can be the top wall and the bottom wall of battery cell 100 respectively, so that the explosion-proof valve can be provided on the top wall or the bottom wall of the battery cell 100.

The explosion-proof valve is provided on the first wall of accommodation cavity 11, and the air guide channel is provided extending along the first direction, which is conducive to directly guiding the gas to the position of the explosion-proof valve and improving the efficiency of gas guidance. The air guide channel can increase the exhaust space inside the accommodation cavity 11, which facilitates the gas flow inside the accommodation cavity 11. At the same time, the air guide channel can also limit the movement direction of the gas, avoid the gas moving directionlessly inside the housing 10, improve the flow speed of the gas, and guide the gas generated during the cycling process of the battery cell 100 to the explosion-proof valve, thereby increasing the smoothness of exhaust and improving the exhaust effect.

During the cycling use of the battery cell 100, a large amount of gas is generated inside the battery cell 100, the gas can enter the air guide channel through the vent hole 23, and then be guided to the explosion-proof valve through the air guide channel and discharged. Therefore, the air guide plate 20 of the present application can improve the exhaust situation inside the battery cell 100, and reduce the internal pressure of the battery cell 100, thereby reducing the probability of thermal runaway of the battery cell 100 and the risk of a weld seam of the housing 10 cracking caused by excessive pressure.

Further, the air guide plate 20 can be provided between two adjacent electrode assemblies 30, and the air guide plate 20 can define the air guide channel within the plate. The air guide plate 20 can also be provided between the electrode assembly 30 and the accommodation cavity 11, the air guide plate 20 can also define the air guide channel within the plate, and the air guide plate 20 can also cooperate with the inner wall of the accommodation cavity 11 to define the air guide channel. The air guide plate 20 can also be provided both between the electrode assemblies 30 and between the electrode assembly 30 and the accommodation cavity 11.

According to the battery cell 100 of the embodiment of the present application, providing the air guide plate 20 allows for a relatively large discharge space for the gas generated during the cycling process of the battery cell 100 and improves the exhaust effect, thereby reducing the internal pressure of the battery cell 100, so as to reduce the probability of thermal runaway of the battery cell 100 and the risk of a weld seam of the housing 10 cracking caused by excessive pressure. Additionally, the movement direction of the gas can be limited, and the gas generated during the cycling process of the battery cell 100 can be guided to be smoothly discharged, improving the exhaust effect.

According to an example of the present application, as shown in FIG. 4, the first wall is a top wall of the accommodation cavity 11, and the explosion-proof valve is provided on the first wall of the housing 10.

It can be understood that the first wall is the top wall of the accommodation cavity 11, then the second wall is the bottom wall of the accommodation cavity 11, and the explosion-proof valve is provided on the first wall of the accommodation cavity 11, that is, provided on the upper part of the battery cell 100. This is conducive to ensuring the exhaust space at the position of the explosion-proof valve, so that the gas in accommodation cavity 11 can be smoothly discharged, thereby reducing the internal pressure of the battery cell 100, reducing the probability of thermal runaway of the battery cell 100 and the risk of a weld seam of the housing 10 cracking caused by excessive pressure.

In this embodiment, providing the explosion-proof valve on the top wall of the accommodation cavity 11 is conducive to ensuring the exhaust space at the position of the explosion-proof valve, so that the gas in the accommodation cavity 11 can be smoothly discharged, thereby reducing the internal pressure of the battery cell 100, reducing the probability of thermal runaway of the battery cell 100 and the risk of a weld seam of the housing 10 cracking caused by excessive pressure.

According to an example of the present application, as shown in FIG. 4, an electrode assembly 30 is provided in the accommodation cavity 11, and the air guide plate 20 is provided between a sidewall of the accommodation cavity 11 and the electrode assembly 30.

The electrode assembly 30 is a core component of the battery cell 100, and the electrode assembly 30 is composed of a positive electrode sheet, a negative electrode sheet, and a separator. The battery cell 100 mainly works by moving metal ions between the positive electrode sheet and the negative electrode sheet. During the cycling operation of the battery 1000, the electrode assembly 30 expands, and the electrode assemblies 30 squeeze each other. Thereby, by providing the air guide plate 20 between the sidewall of the accommodation cavity 11 and the electrode assembly 30, damage to the electrode assembly 30 or the air guide plate 20 caused by mutual squeezing between the air guide plate 20 and the electrode assembly 30 can be reduced, and the probability of blockage of the air guide channel can be effectively reduced, thereby ensuring the exhaust space and improving the exhaust effect.

In this embodiment, by providing the air guide plate 20 between the sidewall of the accommodation cavity 11 and the electrode assembly 30, damage to the electrode assembly 30 or the air guide plate 20 caused by mutual squeezing between the air guide plate 20 and the electrode assembly 30 can be reduced, and the probability of blockage of the air guide channel can be effectively reduced, thereby ensuring the exhaust space and improving the exhaust effect.

According to an example of the present application, as shown in FIG. 4, the number of the air guide plates 20 is plural, and the plural air guide plates 20 are arranged along a circumferential direction of the accommodation cavity 11.

For example, as shown in FIG. 4, the housing 10 is rectangular, the accommodation cavity 11 is formed as a rectangular cavity with a rectangular cross-section, and the circumferential direction of the accommodation cavity 11 refers to the sidewalls extending vertically around the accommodation cavity 11. In this way, the air guide plate 20 can guide and exhaust the gas generated during the cycling process of the battery cell 100 from plural directions, thereby improving the exhaust effect of the battery cell 100, effectively reducing the probability of thermal runaway of the battery cell 100, and improving the use reliability of the battery cell 100.

For example, the number of the air guide plates 20 can be two, three or more.

In this embodiment, by providing the plural air guide plates 20, the plural air guide plates 20 being arranged along the circumferential direction of the accommodation cavity 11, the exhaust effect of the battery cell 100 can be improved, the probability of thermal runaway of the battery cell 100 can be effectively reduced, and the use reliability of the battery cell 100 can be improved.

According to an example of the present application, as shown in FIG. 4, the accommodation cavity 11 has a first sidewall, a second sidewall, a third sidewall, and a fourth sidewall, the first sidewall and the second sidewall are oppositely arranged in a second direction in a horizontal plane, the third sidewall and the fourth sidewall are oppositely arranged in a third direction in the horizontal plane, and the first direction, the second direction, and the third direction are perpendicular pairwise. The air guide plate 20 is provided between each of the first sidewall and the second sidewall and the electrode assembly 30, and/or the air guide plate 20 is provided between each of the third sidewall and the fourth sidewall and the electrode assembly 30.

In other words, the air guide plate 20 can be provided only between the first sidewall and the second sidewall and the electrode assembly 30; or the air guide plate 20 can be provided only between the third sidewall and the fourth sidewall and the electrode assembly 30; or the air guide plate 20 can be provided between the first sidewall and the second sidewall and the electrode assembly 30, and the air guide plate 20 can be provided between the third sidewall and the fourth sidewall and the electrode assembly 30.

For example, the second direction can refer to the e1 direction in the FIG. 4; the third direction can refer to the e2 direction in the FIG. 4, so that the second direction is the thickness direction of the battery cell 100, the third direction is the width direction of the battery cell 100, the first sidewall and the second sidewall are two sidewalls of the accommodation cavity 11 in the thickness direction respectively, and the third sidewall and the fourth sidewall are two sidewalls of the accommodation cavity 11 in the width direction respectively.

In this embodiment, by providing the air guide plate 20 between the first sidewall and the second sidewall and the electrode assembly 30 or between the third sidewall and the fourth sidewall and the electrode assembly 30, the energy density of the battery cell 100 can be increased while achieving smooth exhaust; and by providing the air guide plate 20 between the first sidewall, the second sidewall, the third sidewall, and the fourth sidewall and the electrode assembly 30, the space of the air guide channel can be increased, the exhaust space can be greatly increased, and the exhaust effect can be improved, thereby further reducing the internal pressure of the battery cell 100, so as to reduce the probability of thermal runaway of the battery cell 100 and the risk of a weld seam of the housing 10 cracking caused by excessive pressure.

According to an example of the present application, as shown in FIG. 4, in the first direction (for example, in the e3 direction shown in FIG. 4), the air guide plate 20 extends from the first wall of the accommodation cavity 11 to the second wall of the accommodation cavity 11.

The first wall of the accommodation cavity 11 is the top of the battery cell 100, and the second wall of the accommodation cavity 11 is the bottom of the battery cell 100. The explosion-proof valve is provided on the top of the battery cell 100, and the explosion-proof valve is used to discharge the overpressure gas inside the battery cell 100. Further, the air guide plate 20 extends from the bottom of the accommodation cavity 11 to the top of the accommodation cavity 11, so that the gas generated at other positions of the battery cell 100 can be quickly guided to the explosion-proof valve at the top, increasing the speed of gas flow to the explosion-proof valve, and discharging the gas to the outside of the battery cell 100, thereby effectively reducing the probability of thermal runaway of the battery cell 100.

In this embodiment, by providing the air guide plate 20 extending from the second wall of the accommodation cavity 11 to the first wall of the accommodation cavity 11 in the first direction, the gas generated inside the battery cell 100 can be guided to the explosion-proof valve, and then the gas can be discharged to the outside of the battery cell 100, thereby effectively reducing the occurrence of thermal runaway of the battery cell 100.

According to an example of the present application, a spacing between the air guide plate 20 and the second wall of the accommodation cavity 11 is less than or equal to 10 mm.

For example, the spacing between the air guide plate 20 and the second wall of the accommodation cavity 11 can be 1 mm, 2 mm, 3 mm, 5 mm, 6 mm, 8 mm, or 10 mm.

In this embodiment, as the spacing between the air guide plate 20 and the second wall of the accommodation cavity 11 is less than or equal to 10 mm, the probability of exhaust failure of the air guide plate 20 can be effectively reduced, and the exhaust effect can be improved, thereby reducing the probability of thermal runaway of the battery cell 100.

According to an example of the present application, a spacing between the air guide plate 20 and the first wall of the accommodation cavity 11 is less than or equal to 10 mm.

For example, the spacing between the air guide plate 20 and the first wall of the accommodation cavity 11 can be 1 mm, 2 mm, 3 mm, 5 mm, 6 mm, 8 mm, or 10 mm.

It can be understood that when the spacing between the air guide plate 20 and each of the first wall and the second wall of the accommodation cavity 11 is too large, the gas entering the air guide channel cannot be effectively transmitted to the explosion-proof valve, and the gas can re-enter the accommodation cavity 11 from both ends of the air guide channel, thereby reducing the exhaust effect and increasing the probability of thermal runaway of the battery cell 100.

In this embodiment, as the spacing between the air guide plate 20 and the first wall of the accommodation cavity 11 is less than or equal to 10 mm, the probability of exhaust failure of the air guide plate 20 can be effectively reduced, and the exhaust effect can be improved, thereby reducing the probability of thermal runaway of the battery cell 100.

According to an example of the present application, as shown in FIG. 4, the air guide plate 20 has a first edge and a second edge oppositely arranged in a second direction in a horizontal plane, the second direction is perpendicular to the first direction and perpendicular to a thickness direction of the air guide plate 20, the accommodation cavity 11 has a first sidewall and a second sidewall oppositely arranged in the second direction, the first edge is provided facing the first sidewall, and the second edge is provided facing the second sidewall, where a spacing between the first edge and the first sidewall in the second direction is less than or equal to 10 mm; and/or a spacing between the second edge and the second sidewall in the second direction is less than or equal to 10 mm.

Specifically, the second direction can be the width direction of the air guide plate 20 (for example, the e1 direction shown in FIG. 4), and the first edge and the second edge are both side edges in the width direction respectively. By limiting the spacing between the first edge and the first sidewall and the spacing between the second edge and the second sidewall, the width of the air guide plate 20 can be close to the spacing between the first sidewall and the second sidewall, the width of the air guide plate 20 can be increased, thereby increasing the width of the air guide channel and the area of the flow cross-section, so as to increase the exhaust space of the battery cell 100.

For example, the spacing between the first edge and the first sidewall in the second direction can be 1 mm, 2 mm, 3 mm, 5 mm, 6 mm, 8 mm, or 10 mm; the spacing between the second edge and the second sidewall in the second direction can also be 1 mm, 2 mm, 3 mm, 5 mm, 6 mm, 8 mm, or 10 mm.

In this embodiment, as the spacing between the first edge and the first sidewall in the second direction is less than or equal to 10 mm, and the spacing between the second edge and the second sidewall in the second direction is less than or equal to 10 mm, the probability of exhaust failure of the air guide plate 20 can be effectively reduced, and the exhaust effect can be improved, thereby reducing the probability of thermal runaway of the battery cell 100.

According to an example of the present application, as shown in FIG. 6, the air guide plate 20 includes: a plate body 21 and plural support ribs 22, the plate body 21 is provided extending along the first direction, the support ribs 22 are connected to a side of plate body 21 facing the sidewall of accommodation cavity 11, the support ribs 22 extend along the first direction, the plural support ribs 22 are spaced apart in the second direction, the second direction is perpendicular to the first direction and perpendicular to the thickness direction of air guide plate 20, and the air guide channel is defined by cooperation between the support rib 22, the plate body 21, and the sidewall of the accommodation cavity 11.

For example, the second direction can refer to the e1 direction in the accompanying drawings.

Specifically, the plate body 21 is a rectangular plate, and two large surfaces of the plate body 21 abut against the accommodation cavity 11 and the electrode assembly 30 respectively, where a side of the plate body 21 facing away from the sidewall of the accommodation cavity 11 abuts against the electrode assembly 30, and a side of the plate body 21 facing the sidewall of the accommodation cavity 11 abuts against the sidewall of the accommodation cavity 11 through the support rib 22. Thus, the plate body 21 and the electrode assembly 30 are in surface contact, which can increase the contact area between the air guide plate 20 and the electrode assembly 30, thereby effectively preventing damage to the electrode assembly 30 or the air guide plate 20 caused by expansion of the electrode assembly 30 squeezing against the air guide plate 20, so as to improve the reliability of the battery cell 100.

The support rib 22 is formed as a strip-shaped protrusion, one side of the support rib 22 is connected with the plate body 21, and the other side abuts against the sidewall of the accommodation cavity 11. The support rib 22 mainly plays a supporting role, which allows for a certain spacing between the plate body 21 and the accommodation cavity 11, thereby constructing the air guide channel to achieve smooth exhaust. At the same time, by using the cooperation between the support rib 22, the plate body 21, and the sidewall of the accommodation cavity 11 to define the air guide channel, the use of materials can be reduced, the overall structure of the air guide plate 20 can be simplified, and the process difficulty of the air guide plate 20 can be reduced, thereby reducing the production cost of the battery cell 100.

The number of the support ribs 22 is plural, for example, the number of the support ribs 22 can be two, three or more. The plural support ribs 22 are spaced apart in the second direction, and an air guide channel is formed between two adjacent support ribs 22, so that at least one air guide channel can be formed on the air guide plate 20, thereby improving the exhaust effect; at the same time, the plural support ribs 22 can also enhance the structural strength of the air guide plate 20, thereby reducing the probability of deformation of the air guide plate 20, so as to reduce the occurrence of thermal runaway of the battery cell 100 caused by unsmooth exhaust path.

In this embodiment, by providing the plate body 21 and the plural support ribs 22, the contact area between the air guide plate 20 and the electrode assembly 30 can be increased, thereby effectively preventing damage to the electrode assembly 30 or the air guide plate 20 caused by expansion of the electrode assembly 30 squeezing against the air guide plate 20, so as to improve the reliability of the battery cell 100; at the same time, the structural strength of the air guide plate 20 can also be enhanced, thereby reducing the probability of deformation of the air guide plate 20, so as to reduce the probability of thermal runaway of the battery cell 100 caused by unsmooth exhaust path.

According to an example of the present application, as shown in FIG. 6, the vent hole 23 is formed on the plate body 21 and penetrates the plate body 21 along a thickness direction of the plate body 21, and the vent hole 23 is formed between two adjacent support ribs 22.

An air guide channel is formed between two adjacent support ribs 22, and the vent hole 23 is formed between two adjacent support ribs 22, which can be used for communication between the air guide channel and the accommodation cavity 11, so that the gas generated during the cycling process of the battery cell 100 can enter the air guide channel through the vent hole 23, and then move directionally to the explosion-proof valve through the air guide channel and be discharged through the explosion-proof valve.

In this embodiment, by providing the vent hole 23, the gas generated during the cycling process of the battery cell 100 can enter the air guide channel along the vent hole 23 and be discharged to the outside of the battery cell 100 through the air guide channel, thereby achieving the flow guiding effect of the air guide plate 20.

According to an example of the present application, as shown in FIG. 4, the number of the vent holes 23 is plural, and the plural vent holes 23 are spaced apart along a length direction (for example, the e3 direction shown in FIG. 6) and a width direction (for example, the e1 direction shown in FIG. 6) of the plate body 21.

For example, the number of the vent holes 23 can be two, three, or more.

In this embodiment, by providing the plural vent holes 23 and spacing them apart in the length direction and the width direction of the plate body 21, the total opening area of the vent holes 23 can be effectively increased, so that the area of the vent holes 23 can meet the exhaust demand, and at the same time, the gas in the accommodation cavity 11 can enter the air guide channel through the vent holes 23 at different positions, thereby improving the exhaust effect and improving the exhaust efficiency.

According to an example of the present application, the vent hole 23 is a circular hole, an elliptical hole, or a polygonal hole.

In other words, the vent hole 23 can be a circular hole, or an elliptical hole, or a polygonal hole. The structures of the circular hole, the elliptical hole, or the polygonal hole are simple, and easy to manufacture, thereby reducing the manufacturing difficulty of the air guide plate 20 and increasing the manufacturing speed of the air guide plate 20.

Preferably, the vent hole 23 is a circular hole, where the area of the circular hole is relatively large, which facilitates the discharge of gas.

In this embodiment, by providing the vent hole 23 as a circular hole, an elliptical hole, or a polygonal hole, the manufacturing difficulty of the air guide plate 20 can be reduced, and the manufacturing speed of the air guide plate 20 can be increased.

According to an example of the present application, in a projection plane perpendicular to the thickness direction of the plate body 21, a ratio of a projection area of the plural vent holes 23 to a projection area of the plate body 21 is 0.3-0.7.

For example, in a projection plane perpendicular to a thickness direction of the plate body 21, the ratio of the projection area of the plural vent holes 23 to the projection area of the plate body 21 can be 0.3, 0.4, 0.5, 0.6, or 0.7.

In this embodiment, by setting the ratio of the projection area of the plural vent holes 23 to the projection area of the plate body 21 to 0.3-0.7, the occupation area of the plural vent holes 23 on the plate body 21 is not too large, which is conducive to enhancing the structural strength and stability of the plate body 21, and the limiting and air guiding functions of the plate body 21 on the gas entering the air guide channel can be improved, so that the gas can be smoothly discharged along the air guide channel. The setting can also make the occupation area of the vent hole 23 on the plate body 21 not too small, so that the area of the vent hole 23 can meet the exhaust demand, thereby improving the exhaust effect, so as to further reduce the probability of thermal runaway of the battery cell 100.

According to an example of the present application, as shown in FIG. 7, in the second direction, among the plural support ribs 22, two support ribs 22 located on two sides of the air guide plate 20 in the second direction are respectively flush with two side edges of the plate body 21 in the second direction.

In this embodiment, by providing that the two support ribs 22 located on two sides of the air guide plate 20 in the second direction are respectively flush with two side edges of the plate body 21 in the second direction, the exhaust space of the air guide channel can be increased, thereby effectively improving the smoothness of exhaust.

According to an example of the present application, in a thickness direction of the plate body 21, a thickness of the support rib 22 is 2 mm-4 mm.

For example, in a thickness direction of the plate body 21, the thickness of the support rib 22 can be 2 mm, 3 mm, or 4 mm.

It can be understood that in the thickness direction of the plate body 21, the thickness of the support rib 22 is equivalent to the spacing between the plate body 21 and the sidewall of the accommodation cavity 11, that is, the thickness of the support rib 22 affects the cross-sectional size of the air guide channel. When the thickness of the support rib 22 is less than 2 mm and the cycling operation of the battery cell 100 starts, the distance between the plate body 21 and the accommodation cavity 11 may be too small, thereby causing the gas generated by the battery cell 100 to not be able to be discharged from the air guide channel in time. As a result, the pressure inside the battery cell 100 is too large, and a weld seam cracks or the mouth of the explosion-proof valve cracks to the large surface, affecting the service life of the battery cell 100.

In the thickness of the plate body 21, when the thickness of the support rib 22 is greater than 4 mm, the thickness dimension of the air guide plate 20 becomes larger, so that the air guide plate 20 occupies too much internal space of accommodation cavity 11, thereby causing the space of the electrode assembly 30 to shrink, affecting the energy density of the battery cell 100.

In this embodiment, by setting the thickness of the support rib 22 to 2 mm-4 mm in the thickness direction of the plate body 21, without affecting the energy density of the battery cell 100, the discharge space of the gas can be increased, so that the gas generated during the cycling process of the battery cell 100 can be discharged in a timely manner, and the internal pressure of the battery cell 100 can be reduced, thereby reducing the thermal runaway probability of the battery cell 100, and improving the use reliability and prolonging the service life of the battery cell 100.

According to an example of the present application, the support rib 22 is integrally formed with plate body 21; or the support rib 22 and the plate body 21 are separate parts, and the support rib 22 is thermally fused with the plate body 21.

In other words, in some specific embodiments, the support rib 22 is integrally formed with the plate body 21, and in other specific embodiments, the support rib 22 and the plate body 21 are separate parts, and the support rib 22 is thermally fused with the plate body 21.

The support rib 22 being integrally formed with the plate body 21 can simplify the production steps of the air guide plate 20, thereby increasing the production speed of the air guide plate 20 and reducing the production cost of the air guide plate 20.

The support rib 22 and the plate body 21 are separate parts, and connected by thermal fusion. The thermal fusion connection method is simple, and the support rib 22 and the plate body 21 can be produced separately. Therefore, the process complexity of the air guide plate 20 can be reduced, and the mold opening cost can be reduced, thereby reducing the production cost of the air guide plate 20.

In this embodiment, by providing the support rib 22 integrally formed with the plate body 21, the production steps of the air guide plate 20 can be simplified, thereby increasing the production speed of the air guide plate 20 and reducing the production cost of the air guide plate 20. By providing the support rib and the plate body 21 as separate parts, the support rib 22 being thermally fused with the plate body 21, the process complexity of the air guide plate 20 can be reduced, and the mold opening cost can be reduced, thereby reducing the production cost of the air guide plate 20.

According to an example of the present application, the air guide plate 20 is a polypropylene part.

Polypropylene, abbreviated as PP, is a polymer obtained by polymerization of propylene. Polypropylene is a thermoplastic synthetic resin with excellent performance, having corrosion resistance, heat resistance, electrical insulation, high-strength mechanical properties, and good high wear-resistant processing performance, and the price of polypropylene material is relatively low. Thus, by using polypropylene material to make the air guide plate 20, the possibility of the air guide plate 20 being corroded by the electrolyte or being crushed can be reduced, thereby improving the reliability and prolonging the service life of the air guide plate 20, and the production cost of the air guide plate 20 can be reduced.

In this embodiment, by providing the air guide plate 20 as a polypropylene part, the possibility of the air guide plate 20 being corroded by the electrolyte or being crushed can be reduced, thereby improving the reliability and prolonging the service life of the air guide plate 20, and the production cost of the air guide plate 20 can be reduced.

A second aspect of the present application provides a battery 1000, including the battery cell 100 according to the embodiment of the first aspect of the present application.

In some specific embodiments of the present application, for example, as shown in FIG. 3, the battery 1000 can also include a main box 201 and a cover plate 202, where the main box 201 has a cavity with an open top, the plural battery cells 100 are provided in the cavity, and the cover plate 202 is sealed on the top of the main box 201 by fasteners.

Optionally, the plural battery cells 100 can be stacked and arranged in the cavity along the thickness direction of the battery cell 100.

Optionally, the main box 201 is formed in a rectangular box shape, the inner side of the main box 201 defines the cavity, the top of the cavity is open, plural first fixing holes are provided on the main box 201, the cover plate 202 is formed in a horizontally arranged flat plate shape, plural second fixing holes penetrating the cover plate 202 in the up-down direction are provided on the cover plate 202, and the plural first fixing holes correspond one-to-one with the plural second fixing holes and are opposite up and down. The battery 1000 also includes plural fasteners, and the plural fasteners pass through the first fixing holes and the second fixing holes to fasten cover plate 202 to the upper side of the box body 200 of the main box 201.

Optionally, the cover plate 202 can be a carbon steel plate, an aluminum plate, or a composite material plate.

In this embodiment, by providing the box body 200 as the separately arranged main box 201 and cover plate 202, it is convenient to install the battery cell 100 into the box body 200, and by connecting the main box 201 and the cover plate 202 by fasteners, a detachable connection can be achieved, which is convenient for maintenance and replacement, and can ensure the connection strength between the main box 201 and the cover plate 202, and guarantee the overall structural strength of the battery 1000.

In some specific embodiments of the present application, a first adhesive layer is provided on the bottom wall of the cavity, and the bottoms of the plural battery cells 100 are connected with the bottom wall of the main box 201 through the first adhesive layer; and/or a second adhesive layer is provided on the cover plate 202, and the tops of the plural battery cells 100 are connected with the cover plate 202 through the second adhesive layer.

The battery 1000 can include only the first adhesive layer, or only the second adhesive layer, or both the first adhesive layer and the second adhesive layer. The first adhesive layer is used for adhesive connection between the bottom wall of the main box 201 and the battery cell 100, and the second adhesive layer is used for adhesive connection between the cover plate 202 and the battery cell 100, so as to reliably fix the plural battery cells 100 in box body 200, improve the reliability and stability of the connection between the battery cell 100 and the box body 200, and avoid the battery cell 100 shaking in the box body 200.

In this embodiment, by providing the first adhesive layer and the second adhesive layer, and making the bottom of the battery cell 100 adhesively fixed with the bottom wall of the main box 201 through the first adhesive layer, and the top of the battery cell 100 adhesively fixed with the cover plate 202 through the second adhesive layer, the overall strength of the battery 1000 can be enhanced, and the connection stability of the battery cell 100 can be guaranteed.

The battery 1000 of the embodiment of the present application is provided with the battery cell 100 of the above embodiment of the first aspect, improving the overall performance of the battery 1000.

A third aspect of the present application provides an electric device, including the battery 1000 according to the embodiment of the second aspect of the present application.

The electric apparatus can be any device or system that uses the battery 1000 as described above.

The electric device of the embodiment of the present application is provided with the battery 1000 of the above embodiment of the second aspect, improving the overall performance of the electric device.

The battery cell 100 according to a specific embodiment of the present application will be described below with reference to FIG. 4 to FIG. 11.

Referring to FIG. 4, the battery cell 100 includes an end cap 40, an adapter sheet 50, an electrode assembly 30, an air guide plate 20, and a housing 10, where the housing 10 is formed with an open end, and the end cap 40 is provided on one side of the opening of the housing 10 for sealing the open end of the housing 10; the housing 10 has an accommodation cavity 11, the accommodation cavity 11 is filled with electrolyte, and two electrode assemblies 30 and two air guide plates 20 are provided between the electrode assembly 30 and the sidewall of the accommodation cavity 11.

Specifically, the accommodation cavity 11 has a first sidewall, a second sidewall, a third sidewall, and a fourth sidewall, where the first sidewall and the second sidewall are oppositely arranged in a second direction in a horizontal plane, the third sidewall and the fourth sidewall are oppositely arranged in a third direction in the horizontal plane, and the second direction is perpendicular to the third direction. The second direction is the e1 direction shown in the drawings, the third direction is the e2 direction shown in the drawings, and the two air guide plates 20 are vertically provided between the electrode assembly 30 and the third sidewall and the fourth sidewall respectively.

The air guide plate 20 includes a plate body 21 and plural support ribs 22, and at least one air guide channel is defined by cooperation between the plural support ribs 22, the plate body 21, and the sidewall of the accommodation cavity 11. Both the plate body 21 and the support rib 22 are provided vertically, the support rib 22 is connected to a side of the plate body 21 facing the sidewall of the accommodation cavity 11, the plural support ribs 22 are spaced apart in the width direction of the plate body 21 (for example, the e1 direction shown in FIG. 6), and in the width direction, the two support ribs 22 located at the edges of the air guide plate 20 are respectively flush with two side edges of the plate body 21 in the width direction.

A vent hole 23 is also formed on air guide plate 20, the vent hole 23 is formed on the plate body 21 and penetrates the plate body 21 along a thickness direction of the plate body 21, and the vent hole 23 is formed between two adjacent support ribs 22. The vent hole 23 is circular, the number of the vent holes 23 is plural, the plural vent holes 23 are spaced apart along a length direction (for example, the e3 direction shown in FIG. 6) and a width direction (for example, the e1 direction shown in FIG. 6) of the plate body 21, and in a projection plane perpendicular to the thickness direction of the plate body 21, the ratio of the projection area of the plural vent holes 23 to the projection area of the plate body 21 is 0.3-0.7.

Further, the air guide plate 20 extends from the bottom of the accommodation cavity 11 to the top of the accommodation cavity 11, and the air guide plate 20 has a first edge and a second edge oppositely arranged in a second direction in a horizontal plane, where the spacing between the air guide plate 20 and each of the bottom wall and the top wall of the accommodation cavity 11 is less than or equal to 10 mm, and the spacing between the first edge and the first sidewall in the second direction is less than or equal to 10 mm; the spacing between the second edge and the second sidewall in the second direction is less than or equal to 10 mm.

In addition, the air guide plate 20 is a polypropylene part, the support rib 22 and the plate body 21 are separate parts, and the support rib 22 is thermally fused with the plate body 21. In the thickness direction of the plate body 21, the thickness of support rib 22 is 2 mm-4 mm.

During the cycling use of the battery cell 100, a large amount of gas is generated inside the battery cell 100, the gas can enter the air guide channel through the vent hole 23, and then be guided to the explosion-proof valve through the air guide channel and discharged. Therefore, the air guide plate 20 of the present application can improve the exhaust situation inside the battery cell 100, and reduce the internal pressure of the battery cell 100, thereby reducing the probability of thermal runaway of the battery cell 100 and the risk of a weld seam of the housing 10 cracking caused by excessive pressure.

According to the battery cell 100 of the embodiment of the present application, providing the air guide plate 20 allows for a relatively large space for the gas generated during the cycling process of the battery cell 100 and improves the exhaust effect, thereby reducing the internal pressure of the battery cell 100, so as to reduce the probability of thermal runaway of the battery cell 100 and the risk of a weld seam of the housing 10 cracking caused by excessive pressure. Additionally, the movement direction of the gas can be limited, and the gas generated during the cycling process of the battery cell 100 can be guided to be smoothly discharged, improving the exhaust effect.

Finally, it should be noted that: the above embodiments are only used to illustrate the technical solution of the present application, and not to limit it. Although the present application has been described in detail with reference to the foregoing embodiments, those of ordinary skill in the art should understand that: the technical solutions recorded in the foregoing embodiments can still be modified, or some or all of the technical features can be equivalently replaced. These modifications or replacements do not make the essence of the corresponding technical solutions depart from the scope of the technical solutions of the embodiments of the present application, and they should all be covered within the scope of the claims and the specification of the present application. In particular, as long as there is no structural conflict, the various technical features mentioned in the various embodiments can be combined in any manner. The present application is not limited to the specific embodiments disclosed in the text, but includes all technical solutions falling within the scope of the claims.

## Claims

1. A battery cell, comprising:
a housing, the housing having an accommodation cavity, the accommodation cavity having a first wall and a second wall oppositely arranged in a first direction, and the first wall being provided with an explosion-proof valve; and
an air guide plate, the air guide plate being disposed in the accommodation cavity and located between the first wall and the second wall, the air guide plate having an air guide channel and a vent hole, the air guide channel extending along the first direction, and the air guide channel communicating with the accommodation cavity outside the air guide channel through the vent hole.

2. The battery cell according to claim 1, wherein the first wall is a top wall of the accommodation cavity, and the explosion-proof valve is provided on the first wall of the housing.

3. The battery cell according to claim 1 or 2, wherein an electrode assembly is provided in the accommodation cavity, and the air guide plate is provided between a sidewall of the accommodation cavity and the electrode assembly.

4. The battery cell according to claim 3, wherein the number of the air guide plates is plural, and the plural air guide plates are arranged along a circumferential direction of the accommodation cavity.

5. The battery cell according to claim 4, wherein the accommodation cavity has a first sidewall, a second sidewall, a third sidewall, and a fourth sidewall, the first sidewall and the second sidewall are oppositely arranged in a second direction, the third sidewall and the fourth sidewall are oppositely arranged in a third direction, and the first direction, the second direction, and the third direction are perpendicular pairwise,
wherein the air guide plate is provided between each of the first sidewall and the second sidewall and the electrode assembly, and/or the air guide plate is provided between each of the third sidewall and the fourth sidewall and the electrode assembly.

6. The battery cell according to any one of claims 1 to 5, wherein the air guide plate extends from the first wall of the accommodation cavity to the second wall of the accommodation cavity.

7. The battery cell according to claim 6, wherein a spacing between the air guide plate and the second wall of the accommodation cavity is less than or equal to 10 mm; and/or a spacing between the air guide plate and the first wall of the accommodation cavity is less than or equal to 10 mm.

8. The battery cell according to any one of claims 1 to 7, wherein the air guide plate has a first edge and a second edge oppositely arranged in the second direction, the second direction is perpendicular to the first direction and perpendicular to a thickness direction of the air guide plate, the accommodation cavity has a first sidewall and a second sidewall oppositely arranged in the second direction, the first edge is provided facing the first sidewall, and the second edge is provided facing the second sidewall,
wherein a spacing between the first edge and the first sidewall in the second direction is less than or equal to 10 mm; and/or a spacing between the second edge and the second sidewall in the second direction is less than or equal to 10 mm.

9. The battery cell according to any one of claims 1 to 8, wherein the air guide plate comprises: a plate body and plural support ribs, the plate body is provided extending along the first direction, the support ribs are connected to a side of the plate body facing the sidewall of the accommodation cavity, the support ribs extend along the first direction, the plural support ribs are spaced apart in the second direction, the second direction is perpendicular to the first direction and perpendicular to the thickness direction of the air guide plate, and the air guide channel is defined by cooperation between the support ribs, the plate body, and the sidewall of the accommodation cavity.

10. The battery cell according to claim 9, wherein the vent hole is formed on the plate body and penetrates the plate body along a thickness direction of the plate body, and the vent hole is formed between two adjacent support ribs.

11. The battery cell according to claim 9 or 10, wherein the number of the vent holes is plural, and the plural vent holes are spaced apart along a length direction and a width direction of the plate body.

12. The battery cell according to claim 11, wherein the vent hole is a circular hole, an elliptical hole, or a polygonal hole.

13. The battery cell according to claim 11 or 12, wherein in a projection plane perpendicular to the thickness direction of the plate body, a ratio of a projection area of the plural vent holes to a projection area of the plate body is 0.3-0.7.

14. The battery cell according to any one of claims 9 to 13, wherein in the second direction, among the plural support ribs, two support ribs located on two sides of the air guide plate in the second direction are respectively flush with two side edges of the plate body in the second direction.

15. The battery cell according to any one of claims 9 to 14, wherein in the thickness direction of the plate body, a thickness of the support rib is 2 mm-4 mm.

16. The battery cell according to any one of claims 9 to 15, wherein the support rib is integrally formed with the plate body; or the support rib and the plate body are separate parts, and the support rib is thermally fused with the plate body.

17. The battery cell according to any one of claims 1 to 16, wherein the air guide plate is a polypropylene part.

18. A battery, comprising the battery cell according to any one of claims 1 to 17.

19. An electric device, comprising the battery according to claim 18.
